# DEMANDE DE BREVET EUROPEEN

(11) **EP 1 843 137 A1**
(43) Date de publication de la demande: **10.10.2007**
(21) Numéro de dépôt: 07290406.3
(22) Date de dépôt: 03.04.2007
(51) Int. Cl.: G01F 15/06, G01D 4/00

(54) **Dispositif de saisie et de traitement d'informations relevées sur des compteurs**

(30) Priorité: 07.04.2006 FR 0603115
(71) Demandeur: Comptage Immobilier Services, 91300 Massy (FR)
(72) Inventeur: Rigal, Vincent, 92330 Sceaux (FR)
(74) Mandataire: Ramey, Daniel

(57) **Abrégé**

Dispositif de saisie et de traitement d'informations relevées sur des compteurs, tels que des compteurs d'eau chaude et d'eau froide sanitaire dans des immeubles d'habitation, se présentant sous forme d'un terminal portable (34) comprenant un microprocesseur (36) et des mémoires (38) dans lesquelles sont enregistrées des informations sur le réseau de distribution d'eau de chaque immeuble, ce terminal comprenant également des moyens de vérification de cohérence entre les informations relevées sur les compteurs individuels et sur le compteur général d'un même réseau, pour une même période et pour des périodes successives.

## Description

L'invention concerne un dispositif de saisie et de traitement d'informations relevées sur des compteurs installés sur des lignes de distribution dans des locaux tels en particulier que des immeubles d'habitation.

Il est connu d'utiliser, pour effectuer ces relevés, des terminaux de saisie portables dans lesquels un certain nombre d'informations ont été préenregistrées ou téléchargées, telles par exemple que les adresses des locaux à contrôler, les identités des occupants de ces locaux, les emplacements des compteurs et leurs caractéristiques, etc, pour faciliter la tâche des opérateurs.

Dans le cas de la distribution de l'eau dans des immeubles d'habitation, des compteurs individuels sont en général installés dans les appartements et sont gérés par une société de service spécialisée, tandis qu'un compteur général est installé à l'entrée du réseau de distribution d'eau dans l'immeuble et est géré et relevé par la société de distribution d'eau.

Très fréquemment, les immeubles sont aussi équipés d'installations collectives de chauffage et de distribution d'eau chaude sanitaire, qui comportent en entrée des compteurs dits « de sous-station ». Ces derniers sont gérés et relevés par une société spécialisée en charge de la gestion de la chaufferie de l'immeuble.

Les différents relevés sont transmis au gestionnaire de l'immeuble qui répartit ensuite les factures d'eau entre les occupants des appartements.

Cette façon de faire, extrêmement répandue, présente des inconvénients importants. En particulier, il est impossible de vérifier la cohérence des données fournies par les différentes sociétés de service, pour de nombreuses raisons : les relevés n'ont pas été faits à la même date, certains points de puisage ne sont pas équipés de compteurs, il peut exister des fuites dans le réseau de distribution d'eau de l'immeuble, la topologie de ce réseau est mal connue, certains compteurs peuvent être défaillants, certains relevés n'ont pas été faits faute de possibilité d'accès aux compteurs et ont été remplacés par des estimations, etc.

Personne n'est donc en mesure de faire rapidement les rapprochements utiles et une fuite qui se produit en début d'année peut n'être constatée que l'année suivante quand le gestionnaire de l'immeuble dispose des données de consommation fournies par les sociétés de distribution d'eau et de relevage des compteurs. En outre, si le compteur général installé à l'entrée du réseau de distribution dans l'immeuble commence à sous-compter, personne ne pourra le constater avant deux ans.

L'invention a notamment pour but d'éviter ces inconvénients.

Elle propose à cet effet un dispositif de saisie et de traitement d'informations relevées sur des compteurs installés sur des lignes de distribution dans des locaux d'habitation, ce dispositif comprenant au moins un microprocesseur relié à des mémoires, à un clavier de saisie de données et à un écran d'affichage, les mémoires contenant des informations préalablement enregistrées telles que les adresses des locaux et les identités de leurs occupants, ainsi que les précédentes informations relevées sur les compteurs, caractérisé en ce que les mémoires contiennent également des informations sur des réseaux de distribution installés dans lesdits locaux et comprenant chacun plusieurs lignes de distribution équipées de compteurs individuels et au moins un compteur général à l'entrée du réseau, et en ce que des moyens sont prévus pour vérifier la cohérence des informations relevées sur les compteurs individuels et sur le compteur général de chaque réseau.

La connaissance du réseau de distribution dans un immeuble permet de localiser le compteur général du réseau et de relever les informations fournies par ce compteur et le relevé, à la même date, des informations fournies par les compteurs individuels du réseau permet de rapprocher ces informations de celles relevées sur le compteur général et d'effectuer un traitement de cohérence pour une période donnée.

Comme les informations précédemment relevées sur ces compteurs sont disponibles en mémoire, il est également possible de vérifier la cohérence de ces informations pour chaque compteur ou pour un groupe de compteurs sur des périodes successives.

Lorsque le réseau de distribution installé dans un immeuble comprend des sous-réseaux, comportant chacun en entrée un compteur de sous-réseau (ou compteur de sous-station comme précédemment indiqué) qui est relié en entrée au compteur général du réseau et qui est raccordé en sortie à des lignes de distribution équipées de compteurs individuels, les informations correspondant aux sous-réseaux sont enregistrées ou téléchargées dans les mémoires du dispositif qui permet alors de vérifier la cohérence des informations relevées sur le compteur général d'un réseau, sur les compteurs de sous-réseau et sur les compteurs individuels, pour une même période et pour des périodes successives.

Lorsque le dispositif constate un manque de cohérence entre certaines informations, il identifie les compteurs concernés et propose ou demande à l'opérateur, par exemple, d'effectuer des relevés complémentaires sur certains au moins de ces compteurs.

Avantageusement, le dispositif comprend également des moyens d'édition de rapports de résultats de traitement, qui peuvent être remis par l'opérateur aux occupants des locaux ou déposés dans leurs boîtes aux lettres ou bien laissés au gardien de l'immeuble, par exemple.

Dans une première forme de réalisation de l'invention, ce dispositif comprend un terminal de saisie portable auquel sont intégrés les moyens de vérification de cohérence.

Dans une autre forme de réalisation, ce dispositif comprend un terminal de saisie portable qui est équipé de moyens de connexion à un serveur central comportant les moyens précités de vérification de cohérence.

Le dispositif selon l'invention est essentiellement destiné aux relevés des compteurs d'eau froide et d'eau chaude sanitaire dans des immeubles, mais il peut bien entendu avoir d'autres applications, chaque fois qu'il est nécessaire de répartir des débits ou des quantités consommées entre plusieurs personnes.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un réseau de distribution d'eau dans un immeuble ;
- la figure 2 représente schématiquement un dispositif selon l'invention ;
- les figures 3 et 4 sont des tableaux de relevés de consommation:

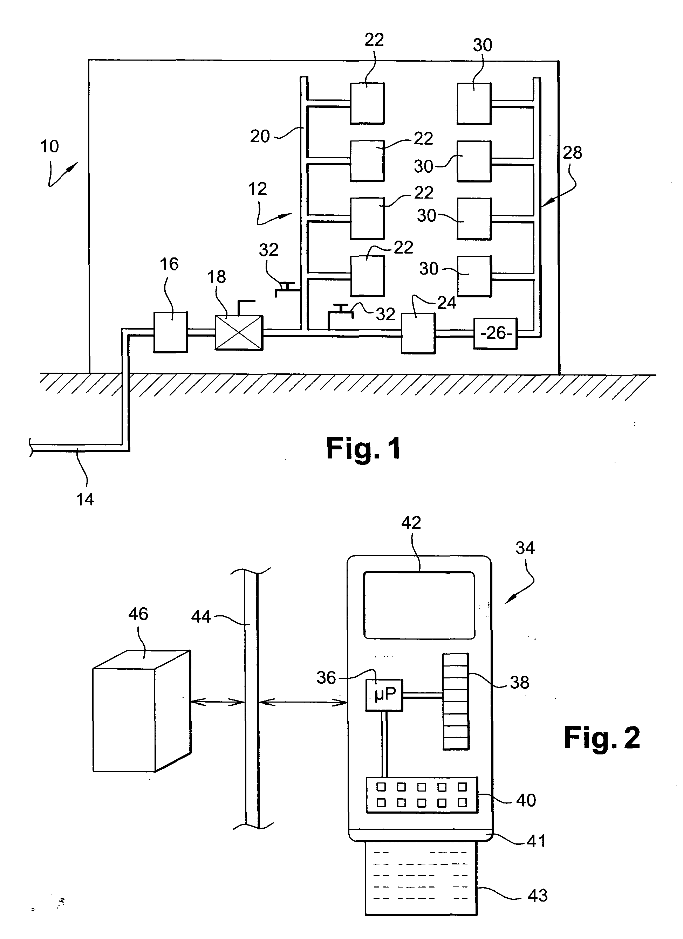

En figure 1, la référence 10 désigne un immeuble dans lequel un réseau 12 de distribution d'eau est alimenté à partir d'une canalisation extérieure 14 par l'intermédiaire d'un compteur général 16 et d'un robinet d'arrêt 18 montés à l'entrée du réseau 12.

De façon classique, ce réseau comprend un premier sous-réseau 20 de distribution d'eau froide sanitaire, comportant un certain nombre de lignes équipées de compteurs individuels 22 installés chacun dans un appartement pour mesurer la quantité d'eau froide sanitaire consommée dans cet appartement.

Le réseau 12 comprend encore un compteur 24 de sous-station, dont l'entrée est raccordée à la sortie du robinet d'arrêt 18 en parallèle avec le sous-réseau 12 d'eau froide sanitaire et dont la sortie est raccordée à une chaudière 26 ou autre moyen de chauffage d'eau.

Cette chaudière 26 alimente un sous-réseau 28 d'eau chaude sanitaire desservant les appartements de l'immeuble et comportant un certain nombre de lignes équipées chacune d'un compteur 30 à l'entrée d'un appartement, pour mesurer la quantité d'eau chaude sanitaire consommée dans chaque appartement.

Quelques moyens de soutirage d'eau froide tels que des robinets 32, peuvent être installés en certains points du sous-réseau d'eau froide 20, par exemple pour le nettoyage des sous-sols, l'arrosage des plantations dans les parties communes, etc.

Le relevé des différents compteurs 16, 22, 24, 30 est effectué par une société de services spécialisée au moyen d'un dispositif selon l'invention représenté en figure 2, ce dispositif comprenant un terminal de saisie portable 34 qui est de la taille d'une calculette ou d'un PDA (assistant personnel numérique).

Ce terminal 34 comprend, pour l'essentiel, un microprocesseur 36 relié à des mémoires 38, à un clavier 40 et à un écran 42 d'affichage d'informations, ainsi que des moyens de liaison, par l'intermédiaire d'un réseau de télécommunications 44**,** à un serveur 46 installé à distance.

L'agent de la société de services spécialisée qui utilise le terminal 34 peut ainsi enregistrer ou télécharger dans son terminal des informations relatives à la tournée qu'il doit effectuer, notamment l'adresse de l'immeuble 10, l'identité des personnes occupant les appartements dans lesquels sont installés des compteurs 22 et 30, les emplacements de ces compteurs, leurs caractéristiques, les consommations qui ont été relevées sur ces compteurs au cours des tournées précédentes, etc.

Ces informations comprennent également, selon l'invention, des informations relatives au réseau 12 de distribution d'eau dans l'immeuble, notamment les emplacements du compteur général 16, du robinet d'arrêt 18, et du compteur de sous-station 24, et éventuellement les emplacements des points 32 de soutirage qui ne sont pas équipés d'un compteur.

L'agent doit effectuer les relevés des compteurs 16, 22, 24 et 30 dans un intervalle de temps court, c'est-à-dire le même jour ou en deux jours consécutifs par exemple.

Son terminal 34 est équipé de moyens de calcul et de traitement permettant de comparer les informations relevées sur les différents compteurs et de vérifier leur cohérence, pour signaler immédiatement à l'agent les compteurs dont les relevés ne seraient pas cohérents et lui demander éventuellement de vérifier certains au moins de ces relevés, c'est-à-dire de retourner dans les appartements équipés de ces compteurs, et de relever à nouveau les informations affichées sur ces compteurs.

A cette occasion, l'agent peut aussi constater une panne du compteur, un mauvais fonctionnement, une intervention non autorisée sur le compteur, etc.

Lorsque l'agent n'a pas accès à certains compteurs, en raison de l'absence des occupants des appartements ou de leur refus d'ouvrir, des estimations de consommation peuvent être calculées par le terminal 34 à partir des relevés précédents et de l'historique des occupations de ces appartements.

La cohérence recherchée est triple :
- elle concerne les dates des relevés des compteurs, qui doivent être effectués le même jour ou dans un intervalle de temps aussi réduit que possible,
- elle concerne la définition des réseaux de distribution, qui doivent chacun comporter une entrée équipée d'un compteur et des sorties équipées de compteurs. La cohérence des consommations dans un réseau se traduit, en principe, par l'égalité du volume relevé sur le compteur d'entrée et de la somme des volumes relevés sur les compteurs de sortie, quand on ne tient pas compte de quelques points de soutirage non équipés de compteurs.
- elle concerne aussi la cohérence dans le temps des consommations relevées (que l'on vérifie par comparaison des consommations d'une période de relève avec celles des périodes précédentes).

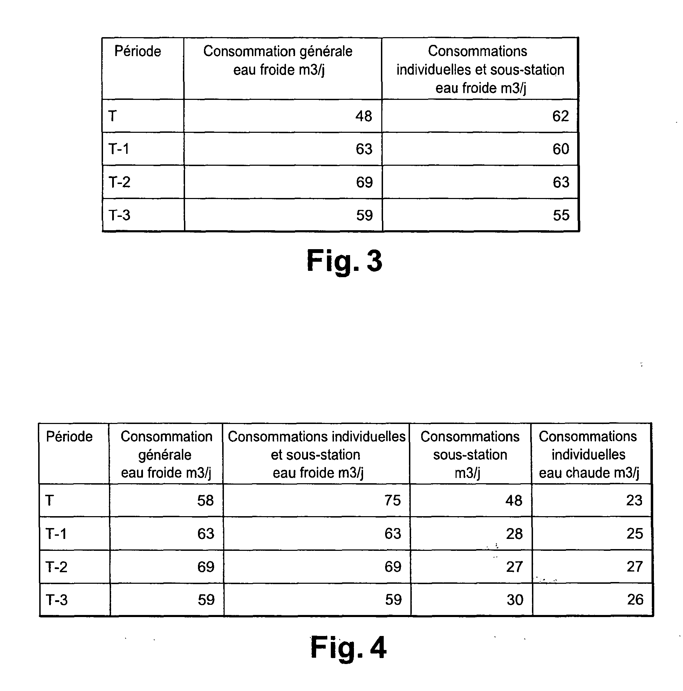

Les tableaux des figures 3 et 4 illustrent deux exemples de constatation d'une incohérence dans les relevés.

Le tableau de la figure 3 permet de comparer, pour quatre périodes successives T, T-1, T-2 et T-3, la consommation générale d'eau froide en mètres cubes par jour à la somme des consommations individuelles et de la sous-station 24 également en mètres cubes par jour.

On voit que pour les périodes T-1, T-2 et T-3, les consommations générales d'eau froide sont légèrement supérieures à la somme des consommations individuelles et de la sous-station 24, ce qui est tout à fait normal. Par contre, la consommation générale d'eau froide, fournie par le compteur général 16 pour la période T, est nettement inférieure à la somme des consommations fournies par les compteurs individuels 22 et le compteur de sous-station 24, ce qui est anormal et permet de constater une défaillance du compteur général 16 ou une erreur de lecture de ce compteur.

Dans le tableau de la figure 4, on a indiqué, pour quatre périodes successives, la consommation générale d'eau froide, la somme des consommations individuelles d'eau froide et de la sous-station 24, la consommation de la sous-station 24 et les sommes des consommations individuelles d'eau chaude, relevées sur les compteurs:30.

Les vérifications des cohérences des informations relevées montrent une anomalie, pour la période T, en ce qui concerne le chiffre relevé sur le compteur de sous-station 24 et la somme des chiffres relevés sur les compteurs individuels 22 et sur le compteur de sous-station 24.

On peut dans ces conditions envisager une erreur de lecture du compteur de sous-station 24 ou une défaillance de celui-ci.

En pratique, on détermine des seuils au-delà desquels les écarts entre les entrées et les sorties d'un réseau ou d'un sous-réseau seront considérés comme anormaux. Ces seuils peuvent être fixes et par exemple de l'ordre de 10 %. De préférence, ils dépendent d'une estimation de la précision des compteurs, par exemple de leur technologie, de leur âge et de leur éventuel degré d'entartrement. On peut également fixer un seuil égal à 10 % pour des compteurs volumétriques ou pour des compteurs de vitesse neufs, qui sera augmenté de 1 % pour chaque année d'utilisation des compteurs de vitesse. On peut également fixer, pour les compteurs individuels, un seuil en fonction du nombre de compteurs dont la consommation n'a pas été lue effectivement mais seulement estimée.

Il est important que ces vérifications de cohérence soient faites le plus rapidement possible et sur place, de façon à ce que l'agent qui a procédé aux relevés, puisse procéder à des relevés complémentaires ou signaler aux occupants des appartements ou au gardien de l'immeuble certains problèmes dont la solution ne lui incombe pas, tels que par exemple une fuite sur le réseau, une défaillance du compteur général, une consommation anormale des parties communes à partir d'un point de soutirage sans compteur, un appartement dont le compteur individuel n'a pu être contrôlé depuis longtemps, etc.

Avantageusement, le terminal portable 34 de l'agent peut être équipé de moyens 41 d'impression de documents 43, qui seront remis à des occupants d'appartements ou au gardien de l'immeuble.

Dans un premier mode de réalisation de l'invention, tous les traitements et toutes les vérifications de cohérence sont réalisés directement et sans délai sur le terminal portable 34 de l'agent, dans lequel sont intégrés tous les moyens nécessaires de calcul et de traitement.

Dans une autre forme de réalisation, ces traitements peuvent être réalisés, au moins en partie, par le serveur 46 auquel les informations nécessaires sont transmises depuis le terminal 34 par l'intermédiaire d'un réseau de télécommunications 44. Les résultats des traitements peuvent ensuite être transmis par tous moyens appropriés aux occupants des appartements ou au gardien de l'immeuble, si nécessaire, et au terminal portable 34 si des vérifications ou des relevés complémentaires doivent être effectués. Cette réalisation est aussi particulièrement adaptée au cas où les compteurs 16, 22 et 30, peuvent être relevés à distance, par exemple par liaison radio ou téléphonique. La relève des compteurs est alors suivie automatiquement des vérifications de cohérence et les points à contrôler sont signalés par tous moyens appropriés au gestionnaire ou au gardien de l'immeuble ainsi qu'éventuellement aux occupants des appartements.

## Revendications

1. Dispositif de saisie et de traitement d'informations relevées sur des compteurs installés sur des lignes de distribution dans des locaux, comprenant au moins un microprocesseur (36) relié à des mémoires (38), à un clavier (40) de saisie de données et à un écran d'affichage (42), les mémoires contenant des informations préalablement enregistrées telles que les adresses des locaux et les identités de leurs occupants, ainsi que les informations précédemment relevées sur les compteurs, **caractérisé en ce que** les mémoires (38) contiennent également des informations sur des réseaux de distribution (12) installés dans lesdits locaux et comprenant chacun plusieurs lignes de distribution équipées de compteurs individuels (22) et au moins un compteur général (16) à l'entrée du réseau, et **en ce que** des moyens sont prévus pour vérifier la cohérence des informations relevées sur les compteurs individuels (22) et sur le compteur général (16) de chaque réseau.

2. Dispositif selon la revendication 1, **caractérisé en ce qu'**il comprend des moyens pour vérifier la cohérence entre les informations relevées sur le compteur général (16) et celles relevées sur les compteurs individuels (22) du réseau, pour une même période.

3. Dispositif selon la revendication 1 ou 2, **caractérisé en ce qu'**il comprend également des moyens pour vérifier la cohérence des informations relevées sur un même compteur ou sur un même groupe de compteurs pour des périodes différentes.

4. Dispositif selon l'une des revendications précédentes, **caractérisé en ce que** les mémoires (38) contiennent également des informations sur des sous-réseaux de distribution appartenant à un même réseau et comportant chacun en entrée un compteur (24) de sous-réseau ou de sous-station relié au compteur général (16) du réseau et raccordé à des lignes de distribution équipées de compteurs individuels (22, 30).

5. Dispositif selon la revendication 4, **caractérisé en ce qu'**il comprend des moyens de vérification de cohérence entre les informations relevées sur le compteur général (16) d'un réseau, sur ses compteurs (24) de sous-réseau ou de sous-station et sur ses compteurs individuels (22, 30), pour une même période et pour des périodes successives.

6. Dispositif selon l'une des revendications précédentes, **caractérisé en ce qu'**il comprend des moyens d'identification des compteurs pour lesquels des incohérences entre les informations relevées ont été constatées et des moyens demandant des relevés complémentaires sur certains au moins de ces compteurs.

7. Dispositif selon l'une des revendications précédentes, **caractérisé en ce qu'**il comprend des moyens (41) d'édition d'un rapport (43) de résultat de traitement.

8. Dispositif selon l'une des revendications précédentes, **caractérisé en ce qu'**il comprend un terminal (34) de saisie portable, auquel sont intégrés les moyens de vérification de cohérence.

9. Dispositif selon l'une des revendications 1 à 7, **caractérisé en ce qu'**il comprend des moyens de connexion à un serveur central (46) comportant des moyens de vérification de cohérence.

10. Dispositif selon l'une des revendications 1 à 9, **caractérisé en ce qu'**il est destiné au relevé des compteurs d'eau froide et d'eau chaude sanitaire dans des immeubles d'habitation.
